# EUROPEAN PATENT APPLICATION

(11) **EP 4 768 149 A1**
(43) Date of publication of application: **01.07.2026**
(21) Application number: 25801131.1
(22) Date of filing: 10.06.2025
(51) Int. Cl.: B21J 9/06, B21D 51/26, B21D 53/88, B30B 15/28, H01M 50/166

(54) **SWAGE APPARATUS AND METHOD FOR DETERMINING ERROR IN SWAGE PROCESS**

(30) Priority: 31.10.2024 KR 20240151693
(71) Applicant: LG ENERGY SOLUTION, LTD., Seoul 07335 (KR)
(72) Inventor: KIM, Daecheon, Daejeon 34122 (KR)
(74) Representative: Goddar, Heinz J.
(86) International application number: PCT/KR2025/007849
(87) International publication number: WO 2026/095241

(57) **Abstract**

Disclosed are a swage apparatus, which is capable of preventing the occurrence of a scratch defect caused by excessive pressure applied to an opening portion of a battery housing during a swage process, and a method of determining an error in the swage process. A swage apparatus according to an embodiment of the present disclosure performs a swage process of compressing an opening portion of a cylindrical battery housing in which an electrode assembly is accommodated, and the swage apparatus includes a swage module including a housing and a pressing operation part and a pressing part provided in the housing, the swage module being configured to compress the opening portion of the battery housing by operating the pressing operation part between a pressure-releasing position and a pressing position in an operation direction parallel to a central axis of the battery housing, and operating the pressing part by the pressing operation part, a load measurement part installed in the housing and configured to measure a load applied in the operation direction by the pressing operation part at the pressing position, and a swage process error determination part configured to determine a swage process error on the basis of a load measurement value applied in the operation direction by the pressing operation part.

## Description

### [Technical Field]

The present disclosure relates to a swage apparatus and a method of determining an error in a swage process, and more particularly, to a swage apparatus, which is capable of preventing the occurrence of a scratch defect caused by excessive pressure applied to an opening portion of a battery housing during a swage process of compressing the opening portion of the battery housing, and a method of determining an error in a swage process.

### [Background]

Secondary batteries have high energy density and offer not only the advantage of innovatively reducing the use of fossil fuel but also the advantage of producing no byproducts when energy is used. Therefore, secondary batteries attract attention as an energy source for improving environmental-friendly characteristics and energy efficiency. In view of these advantages, secondary batteries are widely applied not only to portable devices but also to electric vehicles (EVs) or hybrid electric vehicles (HEVs) driven by electrical driving sources.

In case that a high output voltage is required, a plurality of unit secondary battery cells, i.e., a plurality of battery cells may be connected in series and supply the output voltage by means of a battery pack. In addition, the plurality of battery cells may be connected in parallel and constitute the battery pack depending on a charge/discharge capacity required for the battery pack. The number of battery cells included in the battery pack may be variously set depending on a required output voltage and/or a required charging/discharging capacity.

Among the battery cells, a cylindrical battery may be manufactured by a swage process in which a cylindrical electrode assembly, which is made by winding a positive electrode, a negative electrode, and a separator in a jelly-roll shape, is inserted into a battery housing through an opening portion of the battery housing, and then the opening portion of the battery housing is compressed and assembled. In a swage facility for performing the swage process, excessive pressure is intermittently applied to the opening portion of the battery housing because of various causes, such as a mechanical defect, a mechanical design error, an error in diameter of the battery housing, or the like, which may cause a scratch defect on a lateral surface of the opening portion of the cylindrical battery housing.

When a battery with a scratch defect is recognized by a battery external appearance inspection facility disposed at a rear end of the swage facility, an error in the swage process may be recognized, and a subsequent action may be taken. However, in this case, thousands of batteries located between the swage facility and the battery external appearance inspection facility need to be discarded, or an additional process of sorting defective batteries needs to be performed. For this reason, the productivity deteriorates because the amount of time required to sort the defective batteries and the period of time for which the facilities do not operate are increased, and costs may be lost because the batteries are discarded. The background art described above is provided to explain the background of the present disclosure and does not represent prior art publicly known before the filing of the present disclosure.

### BRIEF DESCRIPTION

### [Technical Problem]

An object of the present disclosure is to provide a swage apparatus, which is capable of preventing the occurrence of a scratch defect caused by excessive pressure applied to an opening portion of a battery housing during a swage process of compressing the opening portion of the battery housing, and a method of determining an error in a swage process.

Technical problems to be solved by the present disclosure are not limited to the above-mentioned technical problems, and other technical problems, which are not mentioned above, may be clearly understood by those skilled in the art from the following description of the present disclosure.

### [Technical Solution]

A swage apparatus according to an aspectof the present disclosure performs a swage process of compressing an opening portion of a cylindrical battery housing in which an electrode assembly is accommodated, and the swage apparatus includes: a swage module including a housing and a pressing operation part and a pressing part provided in the housing, the swage module being configured to compress the opening portion of the battery housing by operating the pressing operation part between a pressure-releasing position and a pressing position in an operation direction parallel to a central axis of the battery housing, and operating the pressing part by the pressing operation part; a load measurement part installed in the housing and configured to measure a load applied in the operation direction by the pressing operation part at the pressing position; and a swage process error determination part configured to determine a swage process error on the basis of a load measurement value applied in the operation direction by the pressing operation part.

The pressing part may include a plurality of jaws arranged to surround the battery housing. The pressing operation part may include collet chucks arranged in a ring shape in the housing and configured to surround the plurality of jaws.

The plurality of jaws may be configured to compress the opening portion of the battery housing while being tightly attached toward a central portion of the battery housing when the collet chucks move downward along an inner inclined surface of the housing.

The load measurement part may include one or more load cells disposed below the collet chuck in the housing.

The load cell may be configured to measure a load applied downward to the load cell by the collet chuck when the collet chucks operate downward.

The swage process error determination part may be configured to determine the swage process error by comparing a load measurement value of the load cell with a preset reference load.

The load measurement part may include a plurality of load cells. The plurality of load cells may be arranged to be spaced apart from one another in a circumferential direction of the housing.

The swage process error determination part may be configured to analyze the swage process error and a cause of the occurrence of the error on the basis of a plurality of load measurement values acquired by the plurality of load cells.

The plurality of load cells may include three load cells arranged at an interval of 120°. The swage process error determination part may be configured to determine at least one swage process error, among an outer diameter dimension defect, an elliptical shape defect, and a mechanical misalignment error of the battery housing, on the basis of a result of comparing the plurality of load measurement values and the reference load and a deviation between the plurality of load measurement values.

The swage process error determination part may be configured to: determine a swage process error, which corresponds to the outer diameter dimension defect of the battery housing, when all the plurality of load measurement values exceed the reference load; determine a swage process error, which corresponds to the elliptical shape defect, when the plurality of load measurement values correspond to a load pattern set in relation to the elliptical shape defect of the battery housing; determine a swage process error, which corresponds to the mechanical misalignment, when at least one of the plurality of load measurement values exceeds the reference load and a maximum deviation between the plurality of load measurement values exceeds a reference deviation.

The housing may have an extension hole through which a line, which is configured to transmit a load measurement value acquired by the load cell to the swage process error determination part, is extended.

The swage process error determination part may be configured to stop an operation of the swage module and generate an alarm to notify of the swage process error when the swage process error determination part determines the swage process error.

A method of determining an error in a swage process according to another aspect of the present disclosure is a method that determines an error in a swage process of compressing an opening portion of a cylindrical battery housing in which an electrode assembly is accommodated, and the method includes: performing the swage process by compressing the opening portion of the battery housing by operating the pressing operation part between a pressure-releasing position and a pressing position in an operation direction parallel to a central axis of the battery housing by a swage module, which includes a housing and the pressing operation part and the pressing part provided in the housing, and operating the pressing part by the pressing operation part; measuring, by a load measurement part installed in the housing, a load applied in the operation direction by the pressing operation part at the pressing position; and determining, by a swage process error determination part, a swage process error on the basis of a load measurement value applied in the operation direction by the pressing operation part.

The measuring of the load may include measuring, by the load cell, a load applied downward to the load cell by the collet chucks when the collet chucks operate downward.

The determining of the swage process error may include determining the swage process error by comparing a load measurement value of the load cell with a preset reference load.

The determining of the swage process error may include analyzing the swage process error and a cause of the occurrence of the error on the basis of a plurality of load measurement values acquired by the plurality of load cells.

The determining of the swage process error may include determining at least one swage process error, among an outer diameter dimension defect, an elliptical shape defect, and a mechanical misalignment error of the battery housing, on the basis of a result of comparing the plurality of load measurement values and the reference load and a deviation between the plurality of load measurement values.

### [Advantageous Effects]

Aspects of the present disclosure provide the swage apparatus, which is capable of preventing the occurrence of a scratch defect caused by excessive pressure applied to the opening portion of the battery housing during the swage process of compressing the opening portion of the battery housing, and the method of determining an error in the swage process.

The effects obtained by the present disclosure are not limited to the aforementioned effects, and other technical effects, which are not mentioned in the present specification, will be clearly understood by those skilled in the art from the following description of the present disclosure.

### BRIEF DESCRIPTION OF DRAWINGS

FIG. 1 is a perspective view illustrating a swage apparatus according to an aspect of the present disclosure.
FIG. 2 is a cross-sectional view illustrating the swage apparatus according to an aspect of the present disclosure.
FIG. 3 is a top plan view illustrating the swage apparatus according to an aspect of the present disclosure.
FIG. 4 is a partial cross-section enlarged view of the swage apparatus according to an aspect of the present disclosure, i.e., an enlarged cross-sectional view of part 'A' in FIG. 2.
FIG. 5 is a partially cut-away perspective view illustrating the swage apparatus according to an aspectof the present disclosure.
FIG. 6 is a cross-sectional view illustrating a state in which a pressing operation part, which constitutes the swage apparatus according to an aspectof the present disclosure, is raised to a pressure-releasing position.
FIG. 7 is a top plan view illustrating a state in which the pressing operation part, which constitutes the swage apparatus according to an aspect of the present disclosure, is raised to the pressure-releasing position.
FIG. 8 is a cross-sectional view illustrating a state in which the pressing operation part, which constitutes the swage apparatus according to an aspectof the present disclosure, is lowered to a pressing position.
FIG. 9 is a top plan view illustrating a state in which the pressing operation part, which constitutes the swage apparatus according to an aspectof the present disclosure, is lowered to the pressing position.
FIG. 10 is a cross-sectional view illustrating a battery housing made before a swage process is performed.
FIG. 11 is a cross-sectional view illustrating the battery housing in a state in which an opening portion thereof is compressed by the swage process.
FIG. 12 is a perspective view illustrating a battery cell assembled and manufactured by the swage apparatus according to an aspect of the present disclosure.
FIG. 13 is a longitudinal cross-sectional perspective view of the battery cell in FIG. 12.
FIG. 14 is a longitudinal cross-sectional view of the battery cell in FIG. 12.
FIG. 15 is a flowchart illustrating a method of determining an error in a swage process according to an aspect of the present disclosure.

### DETAILED DESCRIPTION

### [Best Mode]

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art to which the present disclosure pertains can fully understand the scope of the present disclosure. The present disclosure will be defined only by the scope of the appended claims. Therefore, in some embodiments, well-known process steps, well-known element structures, and well-known technologies will not be specifically described to avoid ambiguous interpretations of the present disclosure. Throughout the specification, the same reference numerals denote the same constituent elements.

In a swage apparatus according to an aspect of the present disclosure, a load measurement part (e.g., a load cell) is installed in a housing of a swage module and measures a load, which is applied, by a pressing operation part of the swage module, in a direction of an operation performed to compress an opening portion of a battery housing at a pressing position, and an error in a swage process is determined on the basis of a load measurement value applied in the operation direction by the pressing operation part. Therefore, it is possible to prevent the occurrence of a scratch defect caused by excessive pressure applied to the opening portion of the battery housing during the swage process of compressing the opening portion of the battery housing.

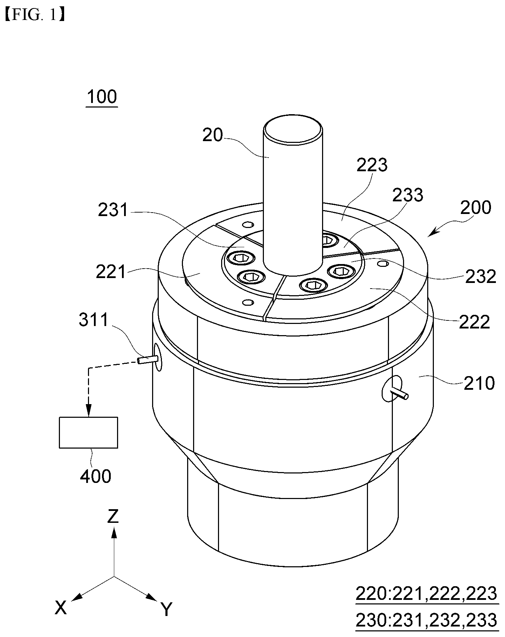

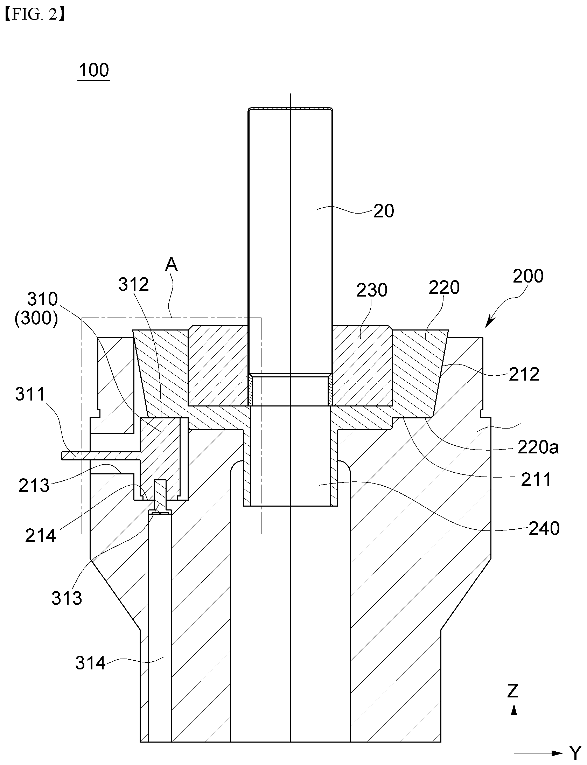

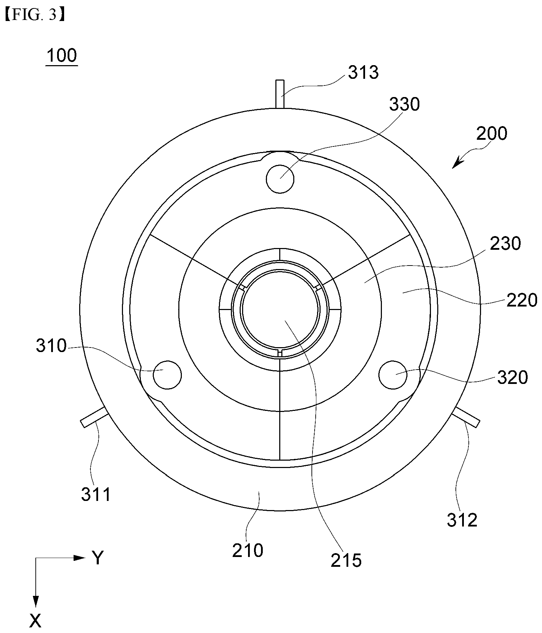

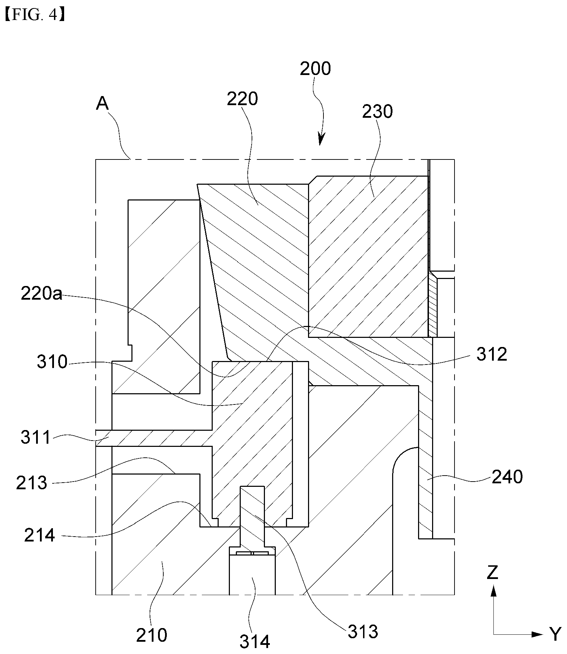

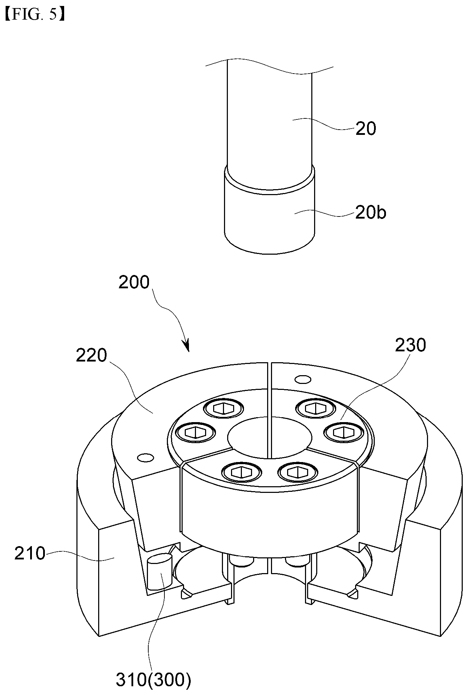

FIG. 1 is a perspective view illustrating the swage apparatus according to an aspect of the present disclosure. FIG. 2 is a cross-sectional view illustrating the swage apparatus according to an aspect of the present disclosure. FIG. 3 is a top plan view illustrating the swage apparatus according to an aspect of the present disclosure. FIG. 4 is a partial cross-section enlarged view of the swage apparatus according to an aspect of the present disclosure, i.e., an enlarged cross-sectional view of part 'A' in FIG. 2. FIG. 5 is a partially cut-away perspective view illustrating the swage apparatus according to an aspect of the present disclosure.

With reference to FIGS. 1 to 5, a swage apparatus 100 according to an aspect of the present disclosure serves to perform a swage process of compressing an opening portion 20b of a cylindrical battery housing 20 in which an electrode assembly is accommodated. The swage apparatus 100 may include a swage module 200, a load measurement part 300, and a swage process error determination part 400. In oneaspect, in accordance with a production rate of an assembling process, a plurality of swage apparatuses 100 may be provided as a rotary type. The swage apparatus 100 may be provided such that the opening portion of the battery housing is compressed by preset pressure of a cylinder after the battery housing is inserted as a swage facility rotates. The swage apparatus 100 is not limited to the illustrated rotary structure, and may be implemented in various shapes.

FIGS. 1 to 5 illustrate the single swage module 200 that constitutes the swage apparatus 100. In case that the swage apparatus 100 includes a plurality of swage modules 200, the swage apparatus 100 according to an aspectof the present disclosure may be configured such that at least one swage module 200, among the plurality of swage modules 200, has the load measurement part 300. The swage process error determination parts 400 may be individually provided for the plurality of swage modules 200 and determine an error in the swage process. Alternatively, the swage process error determination parts 400 may be provided in parallel or sequentially for two or more swage modules 200 and configured to determine an error in the swage process.

The swage module 200 may include a housing 210 and a pressing operation part 220 and a pressing part 230 provided in the housing 210. The housing 210 may be provided to accommodate the pressing operation part 220 and the pressing part 230. That is, the pressing operation part 220 and the pressing part 230 may be accommodated in an internal space provided in the housing 210. An extension hole 213 may be provided in an outer surface of the housing 210 so that a line, which is provided to transfer a load measurement value acquired by the load measurement part 300 to the swage process error determination part 400, may be extended. A support groove 215 for supporting the battery housing 20 may be provided in a central region of the housing 210.

In one aspect, the pressing part 230 may include a plurality of jaws 231, 232, and 233 arranged to surround the battery housing 20. In a state in which the plurality of jaws 231, 232, and 233 are pressed toward the central portion, the plurality of jaws 231, 232, and 233 may be designed to have an inner diameter corresponding to an outer diameter of the opening portion after the battery housing 20 is subjected to the swaging process. The pressing operation part 220 may include collet chucks 221, 222, and 223 arranged in a ring shape to surround the plurality of jaws 231, 232, and 233 in the housing 210. The plurality of collet chucks 221, 222, and 223 may be designed to have an inner diameter corresponding to an outer diameter of the plurality of jaws 231, 232, and 233 in the state in which the plurality of jaws 231, 232, and 233 are pressed toward the central portion.

The plurality of jaws 231, 232, and 233 may be configured to compress the opening portion 20b of the battery housing 20 by being tightly attached toward the central portion of the battery housing 20 when the collet chucks 221, 222, and 223 are lowered along an inner inclined surface of an upper-wide, lower-narrow shape (funnel shape) of the housing 210. The swage module 200 may have a drive device 240 configured to operate the pressing operation part 220 in an operation direction (a third direction Z, i.e., an upward/downward direction in the illustrated example). The drive device 240 may be designed as various drive mechanisms such as a drive cylinder or a drive motor.

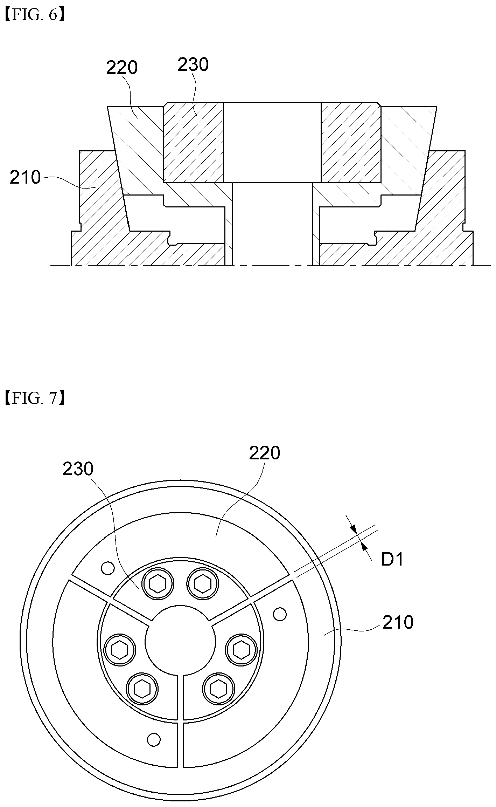

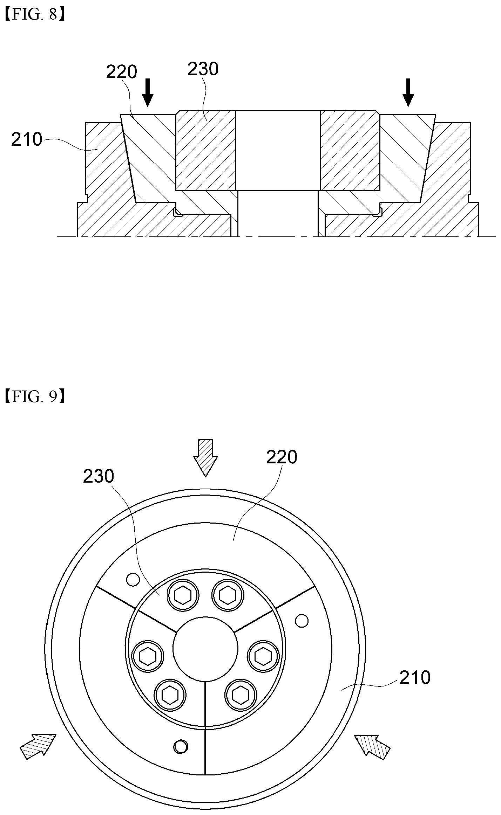

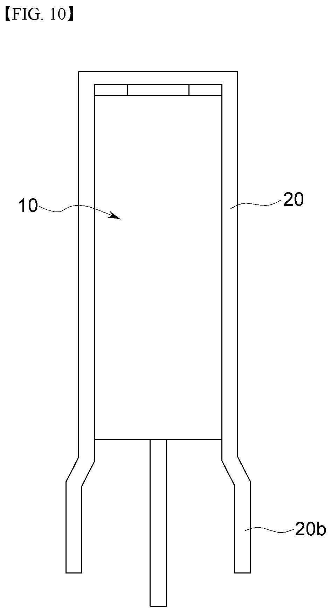

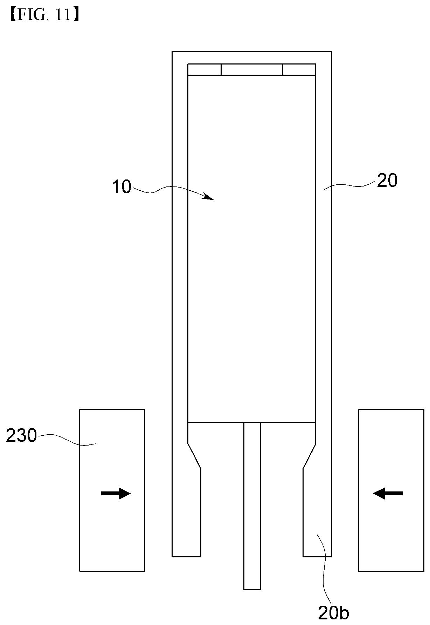

FIG. 6 is a cross-sectional view illustrating a state in which the pressing operation part, which constitutes the swage apparatus according to an aspect of the present disclosure, is raised to a pressure-releasing position. FIG. 7 is a top plan view illustrating a state in which the pressing operation part, which constitutes the swage apparatus according to an aspect of the present disclosure, is raised to the pressure-releasing position. FIG. 8 is a cross-sectional view illustrating a state in which the pressing operation part, which constitutes the swage apparatus according to an aspect of the present disclosure, is lowered to a pressing position. FIG. 9 is a top plan view illustrating a state in which the pressing operation part, which constitutes the swage apparatus according to an aspect of the present disclosure, is lowered to the pressing position. FIG. 10 is a cross-sectional view illustrating the battery housing made before the swage process is performed. FIG. 11 is a cross-sectional view illustrating the battery housing in a state in which the opening portion thereof is compressed by the swage process.

With reference to FIGS. 1 to 11, the swage module 200 may operate the pressing operation part 220 between the pressure-releasing position and the pressing position in the operation direction (the third direction Z) parallel to a central axis of the battery housing 20. In the illustrated aspect, the pressing position is a position set to allow the pressing operation part 220 to compress the opening portion 20b of the battery housing 20 by pressing the pressing part 230, and the pressure-releasing position may be a position set to allow the pressing operation part 220 not to press the pressing part 230. The pressure-releasing position may be a position located above the pressing position.

The swage module 200 may compress the opening portion of the battery housing 20 by operating the pressing part 230 by the pressing operation part 220. The pressing part 230 presses the opening portion 20b of the battery housing 20 as the pressing operation part 220 is lowered from the pressure-releasing position to the pressing position, and the swaging process is performed as the pressing part 230 compresses the opening portion 20b of the battery housing 20. Hereinafter, a cylindrical secondary battery (battery cell) will be described first, and then the swage apparatus 100 will be described.

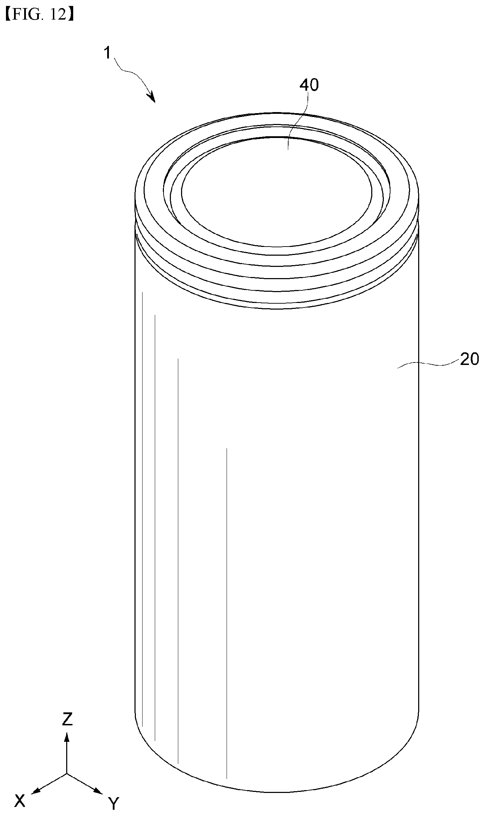

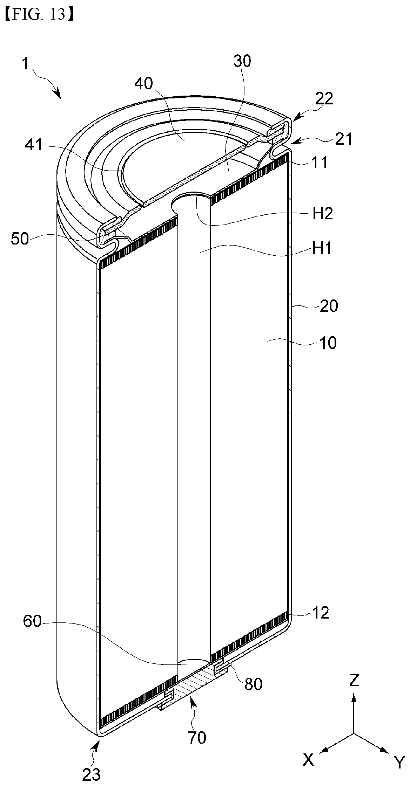

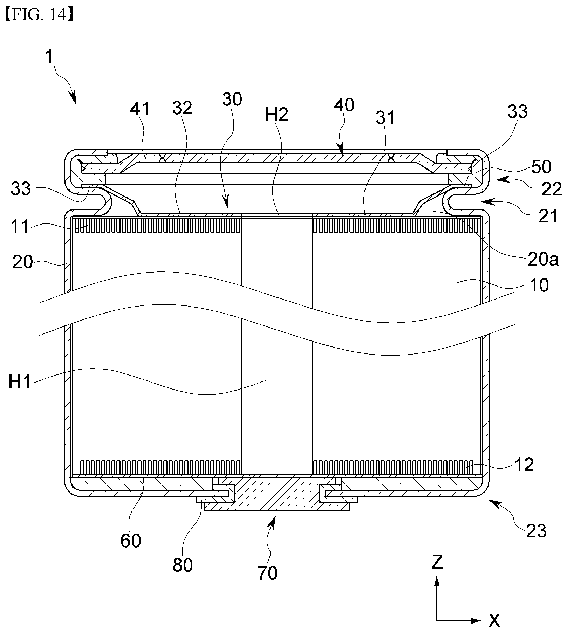

FIG. 12 is a perspective view illustrating a battery cell assembled and manufactured by the swage apparatus according to an aspect of the present disclosure. FIG. 13 is a longitudinal cross-sectional perspective view of the battery cell in FIG. 12. FIG. 14 is a longitudinal cross-sectional view of the battery cell in FIG. 12. For convenience of description, in the present specification, a direction following a longitudinal direction of a winding axis of an electrode assembly wound in a jelly-roll shape is referred to as an 'axial direction', an 'upward/downward direction', or a 'height direction'. Further, a direction surrounding the winding axis is referred to as a 'circumferential direction' or a 'peripheral direction'. Further, a direction toward or away from the winding axis is referred to as a 'radial direction'. Among radial directions, a direction toward the winding axis may be referred to as a 'centripetal direction', and a direction away from the winding axis may be referred to as a 'centrifugal direction'.

A battery cell 1 may include an electrode assembly 10, the battery housing 20, a first current collector 30, a battery cap 40, a sealing gasket 50, a second current collector 60, a rivet 70, and an insulator 80. The battery cell including the electrode assembly 10 is not limited to a shape of the battery cell 1 illustrated in FIGS. 12 to 14. The battery cell may be applied to a battery having another shape. The battery cell 1 may be a cylindrical secondary battery (cylindrical battery cell).

The electrode assembly 10 may have a cylindrical shape in which a first electrode (e.g., negative electrode), a second electrode (e.g., positive electrode), and a separator interposed between these electrodes are wound around the winding axis to define a core and an outer peripheral surface. The electrode assembly 10 may be a jelly-roll type electrode assembly. An additional separator may be provided on an outer peripheral surface of the electrode assembly 10 to implement insulation from the battery housing 20. The electrode assembly 10 may be provided to have a winding structure well known to the technical field of the present disclosure without limitation.

The first electrode of the electrode assembly 10 may include a first electrode current collector and a first electrode active material applied onto one surface or two opposite surfaces of the first electrode current collector. A non-coated portion, on which the first electrode active material is not applied, may be present at one end (upper end) of the first electrode based on a width direction (a direction parallel to the height direction of the battery cell). That is, the first electrode may include a first non-coated portion 11 on which no active material is applied at one long side end in the winding direction, and the first non-coated portion 11 is exposed to the outside of the separator. The first non-coated portion 11 may be provided at an upper side based on the height direction of the electrode assembly 10 accommodated in the battery housing 20. At least a part of the first non-coated portion 11 may be used as an electrode tab by itself. For example, the first non-coated portion 11 may be a negative electrode tab.

The second electrode of the electrode assembly 10 may include a second electrode current collector, and a second electrode active material applied onto one surface or two opposite surfaces of the second electrode current collector. A non-coated portion, onto which the second electrode active material is not applied, may be present at the other end based on the width direction (height direction) of the second electrode. That is, the second electrode may include a second non-coated portion 12 on which no active material is applied at the other long side end in the winding direction, and the second non-coated portion 12 is exposed to the outside of the separator. The second non-coated portion 12 may be provided at a lower side based on the height direction of the electrode assembly 10 accommodated in the battery housing 20. At least a part of the second non-coated portion 12 may be used as an electrode tab by itself. For example, the second non-coated portion 12 may be a positive electrode tab.

The battery housing 20 may be a receptacle having an approximately cylindrical shape having the opening portion formed at one side. The battery housing 20 may be made of a metallic material having conductivity. The battery housing 20 may be configured to accommodate the electrode assembly 10 of the secondary battery. A lateral surface of the battery housing 20 and a lower surface of the battery housing 20 positioned opposite to an opening portion 20a may be integrated. The battery housing 20 may be configured to accommodate the electrode assembly 10 and an electrolyte through the opening portion 20a formed at an upper side of the battery housing 20.

The battery housing 20 may have a beading portion 21 formed in an end region adjacent to the opening portion 20a provided at an upper end of the battery housing 20, and a crimping portion 22 formed on the beading portion 21. The beading portion 21 has a recessed shape formed as a periphery of an outer peripheral surface of the battery housing 20 is indented to a predetermined depth. The beading portion 21 may have a shape indented inward in a region between the opening portion 20a of the battery housing 20 and an internal accommodation space that accommodates the electrode assembly 10.

The beading portion 21 provides a support surface on which the sealing gasket 50 and the battery cap 40 may be seated. In addition, the beading portion 21 may provide a support surface onto which at least a part of a periphery of an edge of the first current collector 30 may be seated and coupled. At least a part of a periphery of an edge of a current collector 30, at least a part of a periphery of an edge of the sealing gasket 50, and at least a part of a periphery of an edge of the battery cap 40 may be seated on an upper surface of the beading portion 21. The beading portion 21 may be formed by indenting the periphery of the outer peripheral surface of the battery housing 20 inward in the region adjacent to the opening portion 20a of the battery housing 20 in the state in which the electrode assembly 10 is accommodated in the battery housing 20 through the opening portion 20a.

In order to stably support the first current collector 30, the battery cap 40, and the sealing gasket 50, the upper surface of the beading portion 21 may have a shape extending in a direction approximately parallel to the lower surface of the battery housing 20, i.e., a shape extending in a direction approximately perpendicular to a sidewall of the battery housing 20. The beading portion 21 may serve to prevent the electrode assembly 10, which has a size corresponding to an inner diameter of the internal accommodation space of the battery housing 20, from being released through the opening portion 20a formed at the upper end of the battery housing 20, and the beading portion 21 may serve as a support portion on which the battery cap 40 and the like are seated.

The crimping portion 22 extends upward from the beading portion 21 and is formed above the beading portion 21. The crimping portion 22 has a shape extending and bent to surround the periphery of the edge and a part of the upper surface of the battery cap 40 disposed above the beading portion 21. The battery cap 40 is fixed onto the beading portion 21 by the crimping portion 22. The crimping portion 22 may have a shape extending inward in the radial direction (centripetal direction) of the battery cell 1 from a periphery of the upper end of the battery housing 20. The crimping portion 22 is provided in a region corresponding to the periphery of the edge of the upper surface of the battery cap 40 and configured to fix the battery cap 40 and prevent the battery cap 40 from separating upward.

An upper end of the crimping portion 22 extends inward by a predetermined distance in the radial direction of the battery cell 1 and is bent to surround a part of the upper surface of the battery cap 40. Therefore, the upper end of the crimping portion 22 fixes the periphery of the edge of the upper surface of the battery cap 40. A peripheral region of the edge of the battery cap 40 is interposed between the upper end of the crimping portion 22 and the beading portion 21 and fixed to the battery housing 20 while covering the opening portion 20a of the battery housing 20.

The first current collector 30 is accommodated in the battery housing 20. The first current collector 30 may be made of a metallic material having conductivity and electrically connected to the electrode assembly 10. The first current collector 30 may be electrically connected to the battery housing 20. That is, the current collector 30 may electrically connect the first electrode of the electrode assembly 10 and the battery housing 20. The first current collector 30 may have a support portion 31, a tab coupling portion 32, and a housing coupling portion 33.

The support portion 31 and the tab coupling portion 32 of the first current collector 30 are disposed above the electrode assembly 10. The support portion 31 is disposed on one surface of the electrode assembly 10. The tab coupling portion 32 extends from the support portion 31 and is coupled to the first non-coated portion 11 of the electrode assembly 10. For example, the tab coupling portion 32 may be coupled to the electrode assembly 10 by welding on a predetermined region in a state in which the tab coupling portion 32 is seated on the first non-coated portion 11 of the electrode assembly 10. The tab coupling portion 32 of the first current collector 30 may be positioned below a lower surface of the beading portion 21.

The first current collector 30 may have a through-hole (not illustrated) so that a flame occurring in the battery cell 1 may be smoothly discharged. Therefore, even though thermal runaway occurs at the side of the electrode assembly 10, a flame and venting gas, which occurs in the electrode assembly 10, may be smoothly discharged through the through-hole without being blocked by the first current collector 30 positioned above the electrode assembly 10. Therefore, it is possible to prevent a pinhole from being formed in the beading portion 21 by a flame moved toward the beading portion 21 positioned in a region adjacent to the electrode assembly 10 and the first current collector 30 and prevent a fire from propagating to the battery cell 1 positioned at a periphery of the battery cell 1 in which the fire occurs.

The support portion 31 may have a current collector hole H2 formed at a position corresponding to a winding hole H1 formed at an approximately central portion of the electrode assembly 10. The winding hole H1 and the current collector hole H2, which communicate with each other, do not need to serve as a passageway for a welding rod or laser beam for welding between an electrode terminal and the current collector or between the electrode terminal and a lead tab (not illustrated) of the electrode assembly 10. Therefore, it is possible to increase an energy density of the electrode assembly 10 by reducing sizes of the winding hole H1 and the current collector hole H2. If a diameter of the current collector hole H2 is excessively smaller than a diameter of the winding hole H1, a hole formed in the winding hole H1 is covered, which may degrade liquid injection properties. Therefore, the winding hole H1 of the electrode assembly 10 may have a diameter substantially equal to or larger than a diameter of the current collector hole H2 so that the current collector hole H2 does not cover the winding hole H1 formed in the core of the electrode assembly 10.

The housing coupling portion 33 extends from the support portion 31 to a peripheral region and is coupled onto an inner surface of the battery housing 20. The housing coupling portion 33 may extend from the support portion 31 and be electrically connected onto the inner surface of the battery housing 20. For example, the housing coupling portion 33 may be coupled to the inner surface of the battery housing 20, e.g., the upper surface of the beading portion 21.

In the region in which the beading portion 21 is formed, an inner diameter of the battery housing 20 may be smaller than a diameter of the electrode assembly 10. In order to ensure stable contact and coupling, the beading portion 21 may have a shape extending in a direction approximately parallel to a lower surface of the battery housing 20, i.e., a direction approximately perpendicular to the sidewall of the battery housing 20. The housing coupling portion 33 may be coupled to the upper surface of the beading portion 21 by welding. For example, laser welding, ultrasonic welding, spot welding, or the like may be applied as welding for coupling the battery housing 20 and the first current collector 30.

The battery cap 40 is provided to cover the opening portion 20a of the battery housing 20. The battery cap 40 may be coupled to the battery housing 20 to seal the opening portion 20a of the battery housing 20 through a crimping process by means of the sealing gasket 50. The battery cap 40 may have a venting portion 41 formed to prevent an increase in internal pressure caused by a gas generated in the battery housing 20.

The venting portion 41 may be configured to be ruptured when the internal pressure of the battery housing 20 increases to a predetermined level or higher. The venting portion 41 may be a region formed on a part of the battery cap 40 and structurally weaker than a peripheral region thereof so as to be easily ruptured when pressure is applied by thermal runaway therein. For example, the venting portion 41 may be a region having a smaller thickness than the peripheral region thereof. The venting portion 41 may be formed as an approximately circular closed loop.

The battery cap 40 covers the opening portion 20a formed at one side of the battery housing 20. The battery cap 40 may be fixed by the crimping portion 22 formed at the upper end of the battery housing 20. In order to increase a fixing force and improve sealability of the battery housing 20, the sealing gasket 50 is interposed between the battery housing 20 and the battery cap 40 and between the current collector 30 and the battery cap 40. An upper end opening portion of the battery housing 20 may be sealed between the battery cap 40 of the sealing gasket 50 and the crimping portion 22 of the battery housing 20, and the battery housing 20 and the battery cap 40 may be electrically insulated. The sealing gasket 50 may include a material having insulation and elasticity. For example, the sealing gasket 50 may include polymer resin.

Therefore, the current collector 30 may be interposed between the beading portion 21 of the battery housing 20 and the sealing gasket 50. The current collector 30 interposed between the beading portion 21 and the sealing gasket 50 may be fixed by bending the crimping portion 22 extending upward from the beading portion 21. The sealing gasket 50 is provided to surround the battery cap 40 and seals the battery cap 40 and the battery housing 20. The sealing gasket 50 serves to maintain sealability between the battery housing 20 and the battery cap 40. The rivet 70 is inserted and coupled into an opening portion formed in a bottom portion of the battery housing 20. The insulator 80 may be interposed between the rivet 70 and the opening portion of the battery housing 20. The insulator 80 may insulate the rivet 70 from the battery housing 20.

With reference back to FIGS. 1 to 11, in order to manufacture the above-mentioned battery cell 1, the swage process of compressing and assembling the opening portion 20b of the battery housing 20 is performed in the state in which the electrode assembly 10 is inserted into the battery housing 20. In case that the opening portion 20b of the battery housing 20 is excessively scratched during the swage process, the scratch may adversely affect performance in assembling the battery. Hereinafter, the load measurement part 300 and the swage process error determination part 400, which serve to effectively prevent the occurrence of a scratch defect caused by excessive pressure applied to the opening portion 20b of the battery housing 20 during the swage process, will be described.

The load measurement part 300 may be installed in the housing 210 of the swage module 200. The load measurement part 300 may be installed to measure a load applied by the pressing operation part 220 in the third direction Z that is the operation direction at a pressing position. The load measurement part 300 may include one or more load cells 310, 320, and 330. The load cells 310, 320, and 330 may be disposed below the pressing operation part 220 in the housing 210 and measure a load (pressure) applied in the third direction Z, which is the operation direction, when the pressing operation part 220 is positioned at the pressing position.

The plurality of load cells 310, 320, and 330 may be disposed below the corresponding collet chucks 221, 222, and 223. The load cells 310, 320, and 330 may measure a load applied downward to the load cells 310, 320, and 330 by the collet chucks 221, 222, and 223 that correspond to the downward operations of the collet chucks 221, 222, and 223, i.e., measure pressure applied in the third direction Z. The load measurement part 300 may include the plurality of load cells 310, 320, and 330. The plurality of load cells 310, 320, and 330 may be arranged to be spaced apart from one another in the circumferential direction of the housing 210.

In the illustrated aspect, the load measurement part 300 includes three load cells 310, 320, and 330 arranged at an interval of 120° interval. However, the number and arrangement of the load cells 310, 320, and 330 may be variously changed. In the exemplary aspect, the load cells 310, 320, and 330 may be provided to be equal number to the collet chucks 221, 222, and 223. The load cells 310, 320, and 330 may be installed to be disposed in central regions of the corresponding collet chucks 221, 222, and 223 based on the circumferential direction.

The swage process error determination part 400 may determine a swage process error on the basis of a load measurement value applied in the operation direction (third direction Z) by the pressing operation part 220. The swage process error determination part 400 may determine a swage process error by comparing a load measurement value of the load cells 310, 320, and 330 with a preset reference load (or reference load range).

In case that the collet chucks 221, 222, and 223 of the pressing operation part 220 are lowered to a predesigned target pressing position and press the pressing part 230 with an appropriate force, the load applied to the load measurement part 300 in the operation direction by the pressing operation part 220 is within the reference load range. On the contrary, when the collet chucks 221, 222, and 223 of the pressing operation part 220 press the pressing part 230 at a position deviating from the predesigned target pressing position, a load applied to the load measurement part 300 in the operation direction by the pressing operation part 220 is lower or higher than the reference load range. In this case, the swage process error determination part 400 may determine that an excessive force is applied to the opening portion 20b of the battery housing 20 during the swage process (in case that the load measurement value of the load measurement part is higher than the reference load) or a low pressing force is applied (in case that the load measurement value of the load measurement part is lower than the reference load).

In an aspect of the present disclosure, the swage process error determination part 400 may analyze not only whether a swage process error occurs but also a cause of the occurrence of a swage process error on the basis of the plurality of load measurement values acquired by the plurality of load cells 310, 320, and 330. On the basis of a result of comparing the plurality of load measurement values acquired by the load measurement part 300 and the preset reference load (reference load range) and a deviation between the plurality of load measurement values, the swage process error determination part 400 may determine a swage process error of the battery housing 20, such as an outer diameter dimension defect, an elliptical shape defect, and/or a mechanical misalignment error.

In one aspect, the swage process error determination part 400 may determine a swage process error, which corresponds to the outer diameter dimension defect of the battery housing 20, in case that all the plurality of load measurement values acquired by the plurality of load cells 310, 320, and 330 are higher than the reference load. The swage process error determination part 400 may determine a swage process error, which corresponds to the elliptical shape defect, in case that the plurality of load measurement values acquired by the plurality of load cells 310, 320, and 330 correspond to a load pattern set in relation to the elliptical shape defect of the battery housing 20.

The swage process error determination part 400 may determine a swage process error, which corresponds to the mechanical misalignment, in case that at least one of the plurality of load measurement values acquired by the plurality of load cells 310, 320, and 330 is higher than the reference load and a maximum deviation between the plurality of load measurement values exceeds a reference deviation. In case that the swage process error determination part 400 determines the swage process error, the operation of the swage module 200 may be stopped, and an alarm may be generated to notify of a swage process error and a caused of the occurrence of the swage process error. The swage process error alarm may be generated in various ways such as a sound, an alarm sound, a message, a display screen output, or the like.

In order to accurately determine an error in the swage process, the load measurement part 300 needs to be installed to accurately measure the load (pressure) applied in the operation direction (third direction, Z) by the pressing operation part 230. The swage apparatus according to an aspect of the present disclosure may have a plurality of load cell mounting grooves 214 disposed in the housing 210 in the circumferential direction so that the pressing operation part 230 may measure, with high accuracy, the load applied in the third direction Z that is the upward/downward direction.

A support shaft 313 may be installed in the third direction Z on a bottom surface of each of the load cell mounting grooves 214 to support the load cell 313 in the upward/downward direction. The support shaft 313 may be inserted through an installation groove 314 and mounted in the housing 210. Therefore, an error in the swage process may be accurately determined by accurately measuring an upward/downward pressing force applied in the third direction Z by the load cells 310, 320, and 330.

Stepped projection grooves 220a may be respectively formed on edge portions between bottom surfaces and outer surfaces of the collet chucks 221, 222, and 223 so that the collet chucks 221, 222, and 223 of the pressing operation part 220 may transmit the load to the load cells 310, 320, and 330 in the upward/downward direction. When the collet chucks 221, 222, and 223 of the pressing operation part 220 are lowered, the stepped projection grooves 220a of the collet chucks 221, 222, and 223 apply a load in the third direction Z by pressing upper surfaces 312 of the corresponding load cells 310, 320, and 330. The collet chucks 221, 222, and 223 may be lowered to the determined positions based on the load cells 310, 320, and 330 by the plurality of stepped projection grooves 220a provided in the circumferential direction of the pressing operation part 220. Therefore, it is possible to reduce a load error caused by position misalignment of the collet chucks 221, 222, and 223.

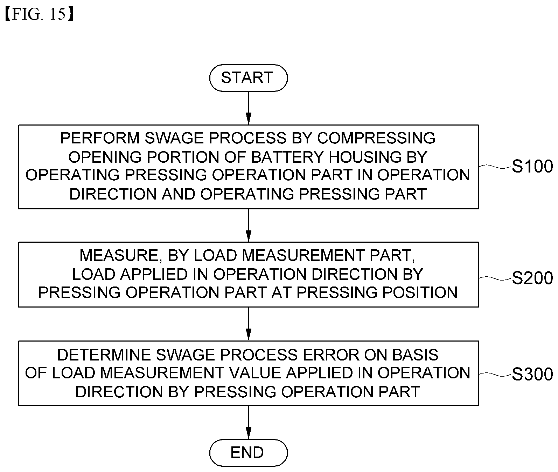

FIG. 15 is a flowchart illustrating a method of determining an error in a swage process according to an aspect of the present disclosure. A method of determining an error in a swage process according to an aspect of the present disclosure is a method of determining an error in the swage process of compressing the opening portion 20b of the cylindrical battery housing 20 in which the electrode assembly 10 is accommodated, and the method may include a step S100 of performing the swage process by compressing the opening portion 20b of the battery housing 20 by operating the pressing operation part 220 between the pressure-releasing position and the pressing position in the operation direction parallel to the central axis of the battery housing 20 by the swage module 200, which includes the housing 210 and the pressing operation part 220 and the pressing part 230 provided in the housing 210, and operating the pressing part 230 by the pressing operation part 220, a step S200 of measuring, by the load measurement part 300 installed in the housing 210, a load applied in the operation direction by the pressing operation part 220 at the pressing position, and a step S300 of determining, by the swage process error determination part 400, a swage process error based on the load measurement value applied in the operation direction by the pressing operation part 220.

According to the swage apparatus and the method of determining an error in the swage process according to an aspect of the present disclosure described above, it is possible to recognize in advance a situation in which excessive pressure is applied to the opening portion of the battery housing because of a cause, such as a mechanical defect or mechanical design error of the swage facility or a diameter error of the battery housing, during the swage process, thereby preventing the occurrence of a product in which the lateral surface of the opening portion of the cylindrical battery housing has a scratch defect. Accordingly, it is possible to reduce the amount of costs required to discard defective batteries and a period of time for sorting defective batteries by recognizing a swage process error and performing a subsequent action at an early stage before thousands of defective batteries are manufactured, and it is possible to improve battery productivity by reducing facility downtime.

The present disclosure has been described with reference to the limited embodiments and the drawings, but the present disclosure is not limited thereto. The described embodiments may be changed or modified by those skilled in the art to which the present disclosure pertains within the technical spirit of the present disclosure and within the scope equivalent to the appended claims.

## Claims

1. A swage apparatus configured to perform a swage process of compressing an opening portion of a cylindrical battery housing in which an electrode assembly is accommodated, the swage apparatus comprising:
a swage module comprising a housing and a pressing operation part and a pressing part provided in the housing, the swage module being configured to compress the opening portion of the battery housing by operating the pressing operation part between a pressure-releasing position and a pressing position in an operation direction parallel to a central axis of the battery housing, and operating the pressing part by the pressing operation part;
a load measurement part installed in the housing and configured to measure a load applied in the operation direction by the pressing operation part at the pressing position; and
a swage process error determination part configured to determine a swage process error on the basis of a load measurement value applied in the operation direction by the pressing operation part.

2. The swage apparatus of claim 1, wherein the pressing part comprises a plurality of jaws arranged to surround the battery housing, and
wherein the pressing operation part comprises collet chucks arranged in a ring shape in the housing and configured to surround the plurality of jaws.

3. The swage apparatus of claim 2, wherein the plurality of jaws are configured to compress the opening portion of the battery housing while being tightly attached toward a central portion of the battery housing when the collet chucks move downward along an inner inclined surface of the housing.

4. The swage apparatus of claim 2, wherein the load measurement part comprises one or more load cells disposed below the collet chuck in the housing.

5. The swage apparatus of claim 4, wherein the load cell is configured to measure a load applied downward to the load cell by the collet chuck when the collet chucks operate downward.

6. The swage apparatus of claim 5, wherein the swage process error determination part is configured to determine the swage process error by comparing a load measurement value of the load cell with a preset reference load.

7. The swage apparatus of claim 6, wherein the load measurement part comprises a plurality of load cells,
wherein the plurality of load cells are arranged to be spaced apart from one another in a circumferential direction of the housing, and
wherein the swage process error determination part is configured to analyze the swage process error and a cause of the occurrence of the error on the basis of a plurality of load measurement values acquired by the plurality of load cells.

8. The swage apparatus of claim 7, wherein the plurality of load cells comprise three load cells arranged at an interval of 120°, and
wherein the swage process error determination part is configured to determine at least one swage process error, among an outer diameter dimension defect, an elliptical shape defect, and a mechanical misalignment error of the battery housing, on the basis of a result of comparing the plurality of load measurement values and the reference load and a deviation between the plurality of load measurement values.

9. The swage apparatus of claim 8, wherein the swage process error determination part is configured to:
determine a swage process error, which corresponds to the outer diameter dimension defect of the battery housing, when all the plurality of load measurement values exceed the reference load;
determine a swage process error, which corresponds to the elliptical shape defect, when the plurality of load measurement values correspond to a load pattern set in relation to the elliptical shape defect of the battery housing; and
determine a swage process error, which corresponds to the mechanical misalignment error, when at least one of the plurality of load measurement values exceeds the reference load and a maximum deviation between the plurality of load measurement values exceeds a reference deviation.

10. The swage apparatus of claim 4, wherein the housing has an extension hole through which a line, which is configured to transmit a load measurement value acquired by the load cell to the swage process error determination part, is extended.

11. The swage apparatus of claim 1, wherein the swage process error determination part is configured to stop an operation of the swage module and generate an alarm to notify of the swage process error when the swage process error determination part determines the swage process error.

12. A method of determining an error in a swage process, which determines an error in a swage process of compressing an opening portion of a cylindrical battery housing in which an electrode assembly is accommodated, the method comprising:
performing the swage process by compressing the opening portion of the battery housing by operating a pressing operation part between a pressure-releasing position and a pressing position in an operation direction parallel to a central axis of the battery housing by a swage module, which comprises a housing and the pressing operation part and a pressing part provided in the housing, and operating the pressing part by the pressing operation part;
measuring, by a load measurement part installed in the housing, a load applied in the operation direction by the pressing operation part at the pressing position; and
determining, by a swage process error determination part, a swage process error on the basis of a load measurement value applied in the operation direction by the pressing operation part.

13. The method of claim 12, wherein the pressing part comprises a plurality of jaws arranged to surround the battery housing,
wherein the pressing operation part comprises collet chucks arranged in a ring shape in the housing and configured to surround the plurality of jaws,
wherein the load measurement part comprises one or more load cells disposed below the collet chucks in the housing,
wherein the measuring of the load comprises measuring, by the load cell, a load applied downward to the load cell by the collet chucks when the collet chucks operate downward, and
wherein the determining of the swage process error comprises determining the swage process error by comparing a load measurement value of the load cell with a preset reference load.

14. The method of claim 13, wherein the load measurement part comprises a plurality of load cells,
wherein the plurality of load cells are arranged to be spaced apart from one another in a circumferential direction of the housing, and
wherein the determining of the swage process error comprises analyzing the swage process error and a cause of the occurrence of the error on the basis of a plurality of load measurement values acquired by the plurality of load cells.

15. The method of claim 14, wherein the determining of the swage process error comprises determining at least one swage process error, among an outer diameter dimension defect, an elliptical shape defect, and a mechanical misalignment error of the battery housing, on the basis of a result of comparing the plurality of load measurement values and the reference load and a deviation between the plurality of load measurement values.
